# EUROPÄISCHE PATENTSCHRIFT

(11) **EP 1 279 576 B1**
(45) Veröffentlichungstag und Bekanntmachung des Hinweises auf die Patenterteilung: **22.03.2006**
(21) Anmeldenummer: 02016556.9
(22) Anmeldetag: 24.07.2002
(51) Int. Cl.: B60R 25/04

(54) **Zündschlosssystem für ein Kraftfahrzeug**
Ignition switch system for a motor vehicle
Système de commutateur d'allumage pour véhicule à moteur

(30) Priorität: 25.07.2001 DE 10136187
(43) Veröffentlichungstag der Anmeldung: 29.01.2003
(73) Patentinhaber: Marquardt GmbH, 78604 Rietheim-Weilheim (DE)
(72) Erfinder: Sachs, Ekkehard, 78549 Spaichingen (DE)
(74) Vertreter: Eisele, Otten, Roth & Dobler

(56) Entgegenhaltungen:
- EP-A- 0 794 095
- EP-A- 1 026 054
- EP-A- 1 067 260
- EP-A- 1 091 313
- EP-A- 1 091 314
- DE-A- 19 836 968
- DE-A- 19 853 075
- DE-C- 19 504 991
- FR-A- 2 533 747

## Beschreibung

Die Erfindung betrifft ein Zündschloßsystem nach dem Oberbegriff des Patentanspruchs 1.

In Kraftfahrzeugen befindet sich bei hohen Sicherheitsanforderungen ein elektronisches Zündschloß, das mittels eines elektronischen Schlüssels betätigbar ist. Das elektronische Zündschloß und der elektronische Schlüssel sind Bestandteile des dem Schutz gegen unbefugte Benutzung dienenden Zündschloßsystems.

Aus der DE 44 34 587 A1 ist ein solches Zündschloßsystem mit einem elektronischen Zündschloß und einem elektronischen Schlüssel bekannt. Das Zündschloß weist eine Aufnahme für den Schlüssel auf, die sich in einem als Rotor ausgestalteten Trägerelement befindet. Der Rotor ist mittels des Schlüssels zwischen einer Ausgangs- und mehreren Bewegungsstellungen manuell durch Drehung bewegbar. Nach positiver Auswertung eines zwischen dem Schlüssel und dem Zündschloß ausgetauschten elektronischen Codes ist wenigstens eine vom Zündschloß bewirkbare Funktion, wie das Starten des Kraftfahrzeugs, freigegeben. Zur Auslösung der Funktion wirkt der Rotor in der Bewegungsstellung dementsprechend auf ein Schaltelement ein.

Es ist auch denkbar, was jedoch in der genannten Offenlegungsschrift nicht weiter erwähnt ist, mittels eines am Zündschloß angeordneten Betätigungsorgans manuell auf das Schaltelement einzuwirken. In einem solchen Fall erscheint der Bewegungsablauf im Zündschloß für die manuelle Bedienung des Zündschloßsystems komplex sowie auch fehleranfällig.

Aus der EP 1 091 313 A1 ist ein Fahrberechtigungssystem nach dem Oberbegriff des Anspruchs 1 für ein Kraftfahrzeug bekannt, bei dem ein in der Art eines Identifikationsgebers ausgestalteter elektronischer Schlüssel in eine Aufnahme an einem Trägerelement einführbar ist. Das Trägerelement ist um eine Achse verschwenkbar in einem Gehäuse im Kraftfahrzeug angeordnet, derart daß das Trägerelement in eine geschlossene Stellung in das Gehäuse einschwenkbar sowie aus dem Gehäuse in eine offene Stellung ausschwenkbar ist. Ein Gelenkelement dient zum Festhalten und Verriegeln des Trägerelements in der eingeschwenkten, geschlossenen Stellung, indem Ansätze am Gelenkelement in Führungen, die in der Art einer Herzkurve ausgestaltet sein können, am Trägerelement eingreifen. In der eingeschwenkten, geschlossenen Stellung des Trägerelements kann dann der Motor des Kraftfahrzeugs gestartet werden.

Das Trägerelement ist lediglich zwischen der die Ausgangsstellung bildenden ausgeschwenkten, offenen Stellung sowie der die Bewegungsstellung bildenden eingeschwenkten, geschlossenen Stellung verschwenkbar. Damit besitzt das Fahrberechtigungssystem zudem eine eingeschränkte Funktionalität.

Weiter ist in der EP 0 794 095 A1 ein Fahrberechtigungssystem für ein Kraftfahrzeug mit einem in eine Aufnahme am Armaturenbrett einführbaren Identifikationsgeber gezeigt, so daß nach Austausch eines Codes vom Identifikationsgeber mit einer im Kraftfahrzeug befindlichen Kommunikationseinheit die Fahrberechtigung mittels einer drehbaren Bedienhandhabe des Zündschalters ermöglicht ist. Dabei befindet sich der Identifikationsgeber derart in der Aufnahme, daß die Antennenspule des Identifikationsgebers im wesentlichen parallel zur Spule der Kommunikationseinheit angeordnet ist.

Schließlich geht aus der EP 1 091 314 A1 ein Fahrberechtigungssystem für ein Kraftfahrzeug hervor, bei dem ebenfalls ein Identifikationsgeber in eine Aufnahme an einem Gehäuse im Armaturenbrett einsteckbar ist. Die manuelle Betätigung eines Bedienknopfes, der als Startknopf für den Anlasser des Kraftfahrzeugs dient, aktiviert zusätzlich eine Verriegelungseinrichtung, wodurch ein Finger verriegelnd in eine Vertiefung am Identifikationsgeber eingreift, so daß ein Entnehmen des Identifikationsgebers aus der Aufnahme verhindert ist.

Bei den beiden letztgenannten Fahrberechtigungssystemen nach der EP 0 794 095 A1 sowie der EP 1 091 314 A1 fehlt es bereits an einem bewegbaren Trägerelement und damit auch an einer Bewegungsstellung. Somit besitzen auch diese Fahrberechtigungssysteme eine lediglich eingeschränkte Funktionalität.

Der Erfindung liegt die Aufgabe zugrunde, ein Zündschloßsystem, das ein zwischen einer Ausgangs- und einer Bewegungsstellung bewegbares Trägerelement für die Aufnahme eines elektronischen Schlüssels aufweist, mit einfacher manueller Bedienbarkeit vorzuschlagen, insbesondere das ein separates Betätigungsorgan aufweisende Zündschloß so auszugestalten, daß dieses in einfacher Art und Weise vom Benutzer bedienbar ist.

Diese Aufgabe wird bei einem gattungsgemäßen Zündschloßsystem durch die kennzeichnenden Merkmale des Anspruchs 1 gelöst.

Bei dem in Anspruch 1 beschriebenen Zündschloß ist das Trägerelement in der Art eines Schiebers linear beweglich, wobei die Bewegungsstellung für das Trägerelement als Raststellung ausgebildet ist. Die Raststellung ist durch das Zusammenwirken einer in der Art eines Schaltherzens ausgestalteten Rastkurve mit einem in die Rastkurve eingreifenden, mit einer elastischen Kraft beaufschlagten Raststift festgelegt.

Desweiteren besitzt die Rastkurve eine dem Schaltherz vorgelagerte, in etwa V-förmige Ausgestaltung, derart daß das Trägerelement in eine zwischen der Ausgangs- und der Bewegungsstellung liegende, weitere Bewegungsstellung bewegbar ist. In der weiteren Bewegungsstellung sind bestimmte weitere Funktionen des Kraftfahrzeugs durch das Zündschloß bewirk- und/oder freigebbar. Beispielsweise kann es sich bei den weiteren Funktionen um das Einschalten des Bordnetzes, der Zündung , von elektrischen Verbrauchern, wie dem Radio, o. dgl. handeln.

Das Einstecken des Schlüssels sowie die weitere Bedienung des Schlüssels im Zündschloß durch den Benutzer erfolgt beim erfindungsgemäßen Zündschloß auf einfache Weise. Die Bedienung wird vom Benutzer als besonders ergonomisch empfunden, obwohl auf die Anordnung von zusätzlichen Dämpfungsgliedem im Zündschloß für die Bewegung des Schlüssels verzichtet werden kann. Außerdem arbeitet das Zündschloß trotz der rauhen Bedingungen im Kraftfahrzeug aufgrund des unempfindlichen Schaltherzens sehr zuverlässig und fehlerunanfällig.

Bei dem in Anspruch 9 dargestellten Zündschloßsystem weist das Zündschloß eine Spule und der Schlüssel einen Transponder zur elektromagnetischen Übertragung des elektronischen Codes auf. Die Spule ist derart im Zündschloß angeordnet, daß diese einer Seite des Trägerelements zugewandt ist sowie mit deren Spulenachse im wesentlichen senkrecht auf die Bewegungsrichtung des Trägerelements steht. Weiter ist der Transponder so im Schlüssel angeordnet, daß der Transponder im wesentlichen quer zur Bewegungsrichtung des Trägerelements bei in der Aufnahme befindlichem Schlüssel ausgerichtet ist. Diese Anordnung der Spule sowie des Transponders ermöglicht in der Bewegungsstellung eine Übertragung des Codes in besonders sicherer und fehlerunfälliger Art und Weise.

Das Zündschloß gemäß Anspruch 11 schließlich weist ein insbesondere schräg zur Aufnahme angeordnetes Betätigungsorgan auf, das zur manuellen Auslösung der durch das Zündschloß bewirkbaren Funktion dient. Hierzu wirkt das Betätigungsorgan auf ein im Zündschloß befindliches, dem Trägerelement zugewandtes elektrisches, elektronisches, optisches, sensorisches o. dgl. Schaltelement ein. Im Zündschloß befindet sich weiter ein Umlenkelement, das die in Richtung des Betätigungsorgans erfolgende Betätigungsbewegung in Bewegungsrichtung des Trägerelements umlenkt. Ein solchermaßen ausgestaltetes Zündschloß läßt sich in platzsparender Weise auch in engen Einbauräumen im Kraftfahrzeug unterbringen. Zudem ist das Zündschloß vom Benutzer in besonders ergonomischer Art zu bedienen.

Weitere Ausgestaltungen der Erfindung sind Gegenstand der Unteransprüche.

Das Zündschloß weist ein Gehäuse mit einer Öffnung für das Einstecken des Schlüssels auf. Zur Erzielung einer guten Abdichtung gegen Staub, Schmutz o. dgl. kann die Öffnung durch das Trägerelement in dessen Ausgangsstellung derart verschlossen sein, daß die Aufnahme im Trägerelement mit der Öffnung korrespondiert. Falls erforderlich kann eine vom Schlüssel bewegliche, federbelastete Klappe die Aufnahme verschließen, wenn der Schlüssel nicht eingesteckt ist. Im Gehäuse kann sich schließlich noch eine Führung für die Bewegung des Trägerelements befinden, so daß ein präziser Bewegungsablauf für den Schlüssel gegeben ist.

Um Manipulationen am Zündschloß bei nicht gestecktem Schlüssel zu verhindern, kann in der Aufnahme ein Schlüsseltaster angeordnet sein. Nur wenn sich der Schlüssel in der Aufnahme befindet, gibt der Schlüsseltaster einen Riegel für die Bewegung des Trägerelements frei. Um ein unabsichtliches Verhaken o. dgl. der Aufnahme auszuschließen, kann der Riegel zwei Riegelelemente besitzen. Eine zusätzliche Manipulationssicherheit kann weiter durch zwei einander gegenüberliegende, federbelastete Schlüsselhaken erreicht werden, die zum Eingreifen in den Schlüssel bei in der Aufnahme befindlichem Schlüssel am Trägerelement angeordnet sind. Die Schlüsselhaken sperren die Bewegung des Trägerelements bei nicht in der Aufnahme befindlichem Schlüssel und geben bei in der Aufnahme befindlichem Schlüssel die Bewegung des Trägerelements frei. Zur leichteren Bedienung durch den Benutzer, insbesondere bei Dunkelheit, kann die Aufnahme am Schlüsseltaster mittels eines Lichtleitelementes beleuchtbar ausgestaltet sein.

Zweckmäßigerweise wirkt eine Rückstellkraft mittels einer Druckfeder in Richtung auf die Ausgangsstellung auf das Trägerelement bei dessen Bewegung ein. Diese Rückstellkraft ist zwischen der weiteren Bewegungsstellung und der Bewegungsstellung wirksam, indem ein beispielsweise am Trägerelement angeordneter Schleppschieber beginnend ab der weiteren Bewegungsstellung auf die Druckfeder einwirkt. Somit erfolgt eine vom Benutzer ausgelöste, ansonsten jedoch selbsttätige Rückführung des Schlüssels aus der Bewegungsstellung in die weitere Bewegungsstellung, während der Schlüssel aus der weiteren Bewegungsstellung direkt vom Bediener abgezogen werden kann.

Zur Bewirkung und/oder Freigabe der jeweiligen Funktionen des Zündschlosses können in der Bewegungsstellung sowie gegebenenfalls in der weiteren Bewegungsstellung elektrische, elektronische, optische, sensorische o. dgl. Schaltelemente vom Trägerelement betätigt werden. Bevorzugterweise handelt es sich bei dem Schaltelement um einen Hallsensor, wobei am Trägerelement ein zum Hallsensor korrespondierender Magnet angeordnet ist.

Um eine unzulässige Entnahme des Schlüssels aus dem Zündschloß zu verhindern, kann das Trägerelement in der Bewegungsstellung mittels eines Drehriegels verriegelbar sein. Hierzu bewegt das Trägerelement bei Bewegung in die Bewegungsstellung über einen Stift den Drehriegel in dessen verriegelnde Stellung. Dabei greift der Drehriegel zur Verriegelung in die Rastkurve ein. Der Drehriegel ist seinerseits elektromagnetisch, beispielsweise mittels eines Klappankermagneten, ver- sowie entrastbar.

Zur Aufnahme der elektrischen und/oder elektronischen Bauteile, wie der Schaltelemente, Hallsensoren, Leuchtdioden o. dgl., bietet sich eine Leiterplatte im Gehäuse des Zündschlosses an. Für ein kompaktes Zündschloß läßt sich die Leiterplatte in platzsparender Weise in etwa parallel zur Führung für das Trägerelement anordnen. Zur einfachen Montage im Zündschloß kann die Leiterplatte im Gehäuse eingerastet sein.

Damit der Benutzer die manuelle Bedienung des Betätigungsorgans am Zündschloß besonders ergonomisch empfindet, kann das Umlenkelement als Kniehebel, bestehend aus zwei gelenkig miteinander verbundenen Armen, ausgebildet sein. Das Betätigungsorgan wirkt, beispielsweise mittels eines Stößels, auf das Gelenk der beiden Arme ein. Der eine Arm ist im Gehäuse drehbar befestigt und der andere Arm besitzt zweckmäßigerweise einen wiederum gelenkig verbundenen Ansatz. Dieser Ansatz ist platzsparend in etwa parallel zur Bewegungsrichtung des Trägerelementes geführt und wirkt dann bei der Betätigungsbewegung des Betätigungsorgans auf das Schaltelement ein. Das auf der Leiterplatte angeordnete Schaltelement besteht bevorzugterweise aus einem Hallsensor, der mit einem am Ansatz befindlichen Magneten zusammenwirkt.

Das Betätigungsorgan am Zündschloß kann als Drucktaste ausgebildet sein. Es bietet sich an, daß das Betätigungsorgan in einem schräg am Gehäuse des Zündschlosses angeordneten Gehäuseansatz geführt ist. Der Gehäuseansatz kann verstellbar am Gehäuse des Zündschlosses angeordnet sein, womit ein Ausgleich von Toleranzen bei der Montage des Zündschlosses im Kraftfahrzeug in einfacher Art und Weise erzielbar ist. Um bei Dunkelheit die Bedienung des Betätigungsorgans zu erleichtern, kann das Betätigungsorgan mittels eines Lichtleitelements, das zu einer auf der Leiterplatte angeordneten Leuchtdiode führt, beleuchtbar sein. Schließlich können aufgrund von Toleranzen auftretende Spalte dadurch verdeckt werden, daß das Betätigungsorgan und/oder die Aufnahme durch eine Blende umrahmt ist. Es bietet sich dabei an, die Blende auf das Gehäuse des Zündschlosses aufzurasten.

Die mit der Erfindung erzielten Vorteile bestehen insbesondere darin, daß das Zündschloßsystem einen einfachen, bedienerfreundlichen linearen Bewegungsablauf aufweist. Dabei ist das Zündschloß einfach und kostengünstig ausgestaltet. Insbesondere wird für die Entnahme des Schlüssels aus der Aufnahme kein teueres und fehleranfälliges Dämpfungselement benötigt. Ebenso kann, falls gewünscht, auf die herkömmliche und fehleranfällige klappbare Abdeckung an der Aufnahme des Zündschlosses bei entnommenen Schlüssel verzichtet werden. Das Zündschloßsystem läßt sich trotz hoher Funktionalität und Sicherheit sehr kompakt ausgestalten und ist daher auch in beengten Einbauräumen im Kraftfahrzeug gut unterzubringen. Das Betätigungsorgan kann in beliebiger Art und Weise am Zündschloß entsprechend dem im Kraftfahrzeug zur Verfügung stehenden Einbauraum angeordnet werden, wobei unabhängig von der jeweiligen Anordnung ein ergonomischer Kraft-Weg-Verlauf für die Bedienung des Betätigungsorgans erzielbar ist.

Ein Ausführungsbeispiel der Erfindung ist in den Zeichnungen dargestellt und wird im folgenden näher beschrieben. Es zeigen
- Fig. 1: ein Zündschloßsystem für ein Kraftfahrzeug in perspektivischer Ansicht,
- Fig. 2: einen Teil des Zündschlosses in perspektivischer Ansicht, wobei das Gehäuse teilweise weggelassen ist,
- Fig. 3: einen Längsschnitt durch das in der Instrumententafel eines Kraftfahrzeugs eingebaute Zündschloß mit eingestecktem Schlüssel,
- Fig. 4: einen Schnitt entlang der Linie 4-4 in Fig. 3 und
- Fig. 5: schematisch den Kraft-Weg-Verlauf für das Betätigungsorgan am Zündschloß.

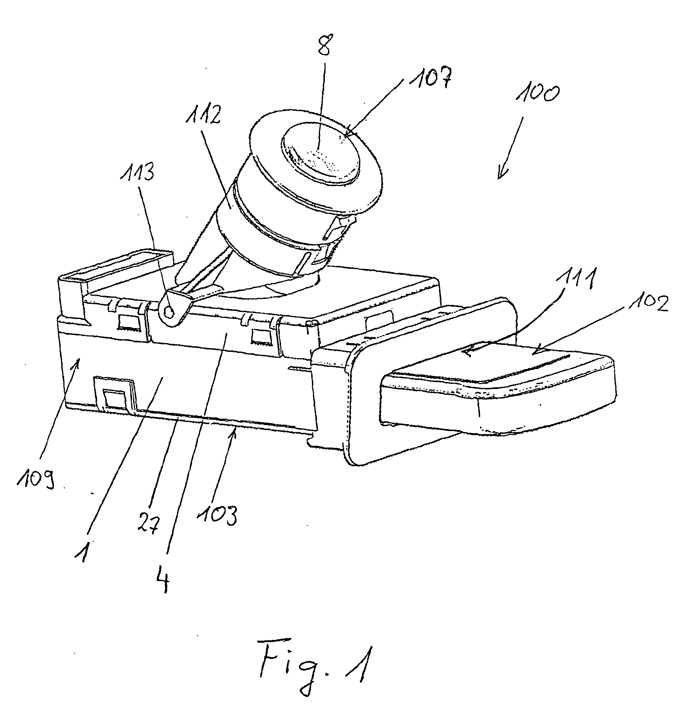

In Fig. 1 ist ein Zündschloßsystem 100 für ein Kraftfahrzeug zu sehen, das aus einem elektronischen Schlüssel 102 und einem elektronischen Zündschloß 103 besteht. Das Zündschloß 103 besitzt ein Gehäuse 109, an dessen Oberseite ein Gehäuseansatz 112 mit einem Betätigungsorgan 107 schräg zur Oberseite des Gehäuses 109 angeordnet ist. In das Zündschloß 103 ist an einer Öffnung 111 der Schlüssel 102 einsteckbar.

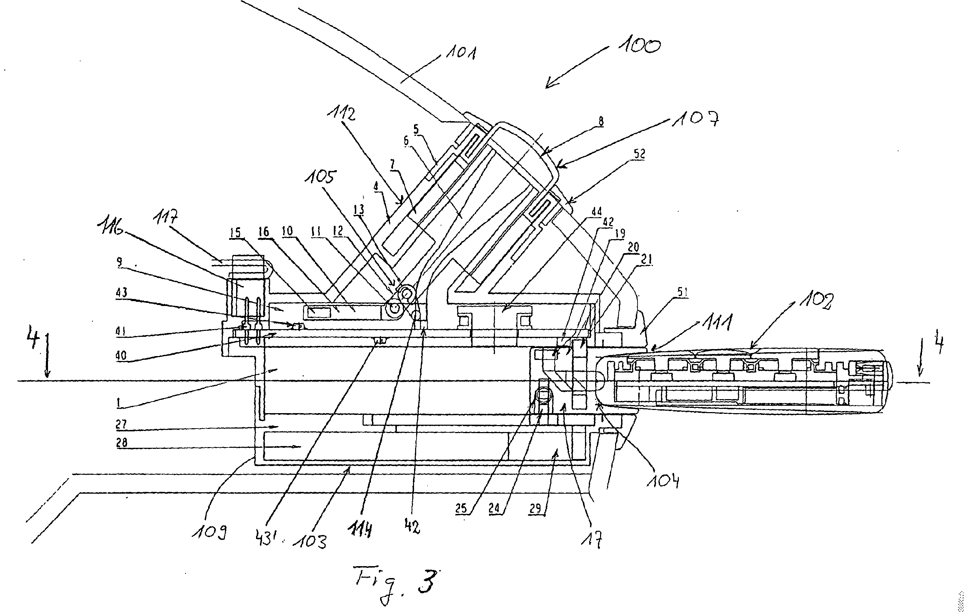

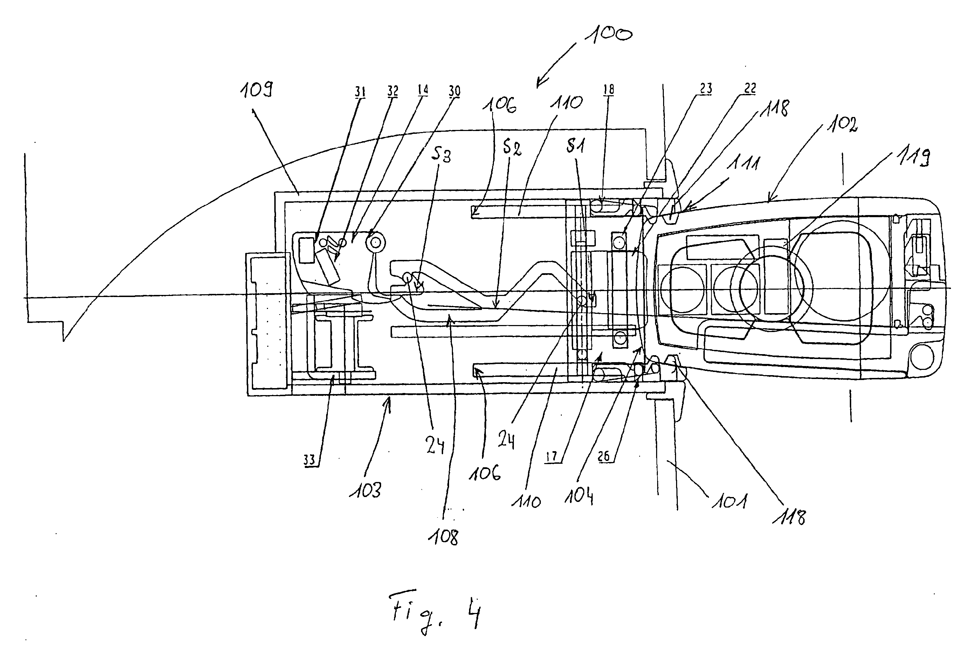

Wie in Fig. 3 zu erkennen ist, ist das Zündschloß 103 in einer schematisch gezeigten Instrumententafel 101 des Kraftfahrzeugs angeordnet. Der Gehäuseansatz 112 ist zum weitgehend automatischen Ausgleich von Toleranzen bei der Montage des Zündschlosses 103 in der Instrumententafel 101 im Kraftfahrzeug verstellbar am Gehäuse 109 angeordnet, indem der Gehäuseansatz 112 mittels eines in Fig. 1 sichtbaren Drehlagers 113 am Gehäuse 109 befestigt ist. Wie weiter in Fig. 3 zu sehen ist, weist das Zündschloß 103 eine in einem Trägerelement 17 befindliche Aufnahme 104 für den Schlüssel 102 auf. Das Trägerelement 17 ist mittels des Schlüssels 102 zwischen einer Ausgangsstellung s1 und wenigstens einer Bewegungsstellung s3 (siehe auch Fig. 4) manuell bewegbar. Hierzu ist das Trägerelement 17 in der Art eines Schiebers linear beweglich ausgestaltet.

In Fig. 3 und 4 ist die Ausgangsstellung s1 des Trägerelements 17 gezeigt, während in der Bewegungsstellung s3 das Trägerelement 17 an einem in Fig. 4 sichtbaren Anschlag 106 anliegt. Die Bewegungsstellung s3 für das Trägerelement 17 ist als Raststellung ausgebildet. Die Raststellung wird durch das Zusammenwirken einer in der Art eines Schaltherzens ausgestalteten Rastkurve 108 mit einem Raststift 24 festgelegt. Hierzu greift der Raststift 24, der mit einer elastischen Kraft beaufschlagt ist, in die Rastkurve 108 ein.

Ist der Schlüssel 102 in die Aufnahme 104 eingeführt und anschließend mitsamt dem Trägerelement 17 aufgrund manueller Einwirkung des Benutzers auf den Schlüssel 102 von der Ausgangsstellung s1 in die Bewegungsstellung s3 gebracht, so wird zwischen dem Schlüssel 102 und dem Zündschloß 103 ein elektronischer Code, und zwar bevorzugt in einer bidirektionalen Kommunikation ausgetauscht. Nach positiver Auswertung des zwischen dem Schlüssel 102 und dem Zündschloß 103 ausgetauschten elektronischen Codes, d.h. es handelt sich um den berechtigten Schlüssel 102, ist wenigstens eine vom Zündschloß 103 bewirkbare Funktion freigegeben. Die Funktion ist nach deren Freigabe dann mittels des schräg zur Aufnahme 104 im Gehäuseansatz 112 angeordneten Betätigungsorgans 107 manuell auslösbar. Bevorzugterweise handelt es sich bei dieser Funktion um das Starten bzw. Stoppen des Kraftfahrzeugs, so daß das Betätigungsorgan 107 die Start/Stop-Taste für den Motor des Kraftfahrzeugs darstellt. Selbstverständlich kann falls notwendig der elektronische Code zur Freigabe-bestimmter Funktionen auch in anderen Stellungen als der Bewegungsstellung s3, beispielsweise auch bereits in der Ausgangsstellung s1, zwischen dem Schlüssel 102 und dem Zündschloß 103 ausgetauscht werden. Weiter kann in der Bewegungsstellung s3 sowie gegebenenfalls in den anderen Stellungen je nach Bedarf auch ein elektrisches, elektronisches, optisches, sensorisches o. dgl. Schaltelement als Signal für die jeweilige Stellung oder auch zum Auslösen von Funktionen durch das Trägerelement 17 oder auch in sonstiger Weise geschaltet werden.

In weiterer Ausgestaltung besitzt das Zündschloß 103, wie bereits erwähnt und in Fig. 1 gezeigt, ein Gehäuse 109, das im Einzelnen aus einem Grundrahmen 1, einem Deckel 4 mit dem Gehäuseansatz 112 für die Start/Stop-Tasterführung (Betätigungsorgan 107) und einem Boden 27 besteht. Das Gehäuse 109 weist an seinem Grundrahmen 1 die Öffnung 111 auf. Die Öffnung 111 ist durch das Trägerelement 17 selbst in dessen Ausgangsstellung derart verschlossen, daß die Aufnahme 104 im Trägerelement 17 mit der Öffnung 111 korrespondiert. Zusätzlich kann die Aufnahme 104 noch mittels einer beweglichen und federbelasteten Klappe verschlossen sein, die jedoch in den Zeichnungen nicht weiter dargestellt ist. Eine solche Klappe wird beim Einstecken des Schlüssels 102 in die Öffnung 111 nach einer Seite wegbewegt und gibt dann die Aufnahme 104 zum vollständigen Einführen des Schlüssels 102 frei.

Wie weiter in Fig. 4 zu sehen ist, ist im Gehäuse 109 das als Schieber ausgestaltete Trägerelement 17 mit der Aufnahme 104 linear beweglich angeordnet. Hierfür befindet sich im Gehäuse 109 eine Führung 110 für die Bewegung des Trägerelementes 17. Außerdem beinhaltet das Gehäuse 109 einen Klappankermagnet 33 und einen Drehriegel 30 mit Druckfeder 32 und Magnet 31. An der Oberseite im Gehäuse 109 ist eine in Fig. 3 sichtbare, in etwa parallel zum Trägerelement 17 angeordnete Leiterplatte 40, die die elektrischen und/oder elektronischen Bauteile, wie Hallsensoren 43, Leuchtdioden 42 o. dgl., aufnimmt, eingerastet. Auf der Leiterplatte 40 befindet sich weiter eine in der Art eines Transponders wirkende sowie zur Energieübertragung dienende Spule 44. Der elektrische Anschluß der Leiterplatte 40 erfolgt über eingepreßte Actionspins 41.

Wie anhand von Fig. 3 und 4 ersichtlich ist, trägt der Schieber 17 Schlüsselhaken 18, insbesondere zwei einander gegenüberliegende Schlüsselhaken 18, einen Schlüsseltaster 22, einen Riegel 21 mit Druckfedern 23, ein Lichtleitelement 20 für den Schlüsseltaster 22 und einen Magnet 19. Weiter ist der als Rastschieber ausgestaltete Raststift 24 mitsamt Druckfedern 25 zur Erzeugung der elastischen Kraft am Schieber 17 angeordnet. Der Boden 27 des Gehäuses 109 trägt eine Druckfeder 28, eine Blattfeder 26 und einen Schleppschieber 29. Außerdem enthält der Boden 27 die Rastkurve 108 für den Raststift 24 und die nicht weiter gezeigte Funktionskurve für die Schlüsselhaken 18. Weiterhin sind im Boden 27 Führungselemente für den Klappankermagnet 33 und den Drehriegel 30 enthalten.

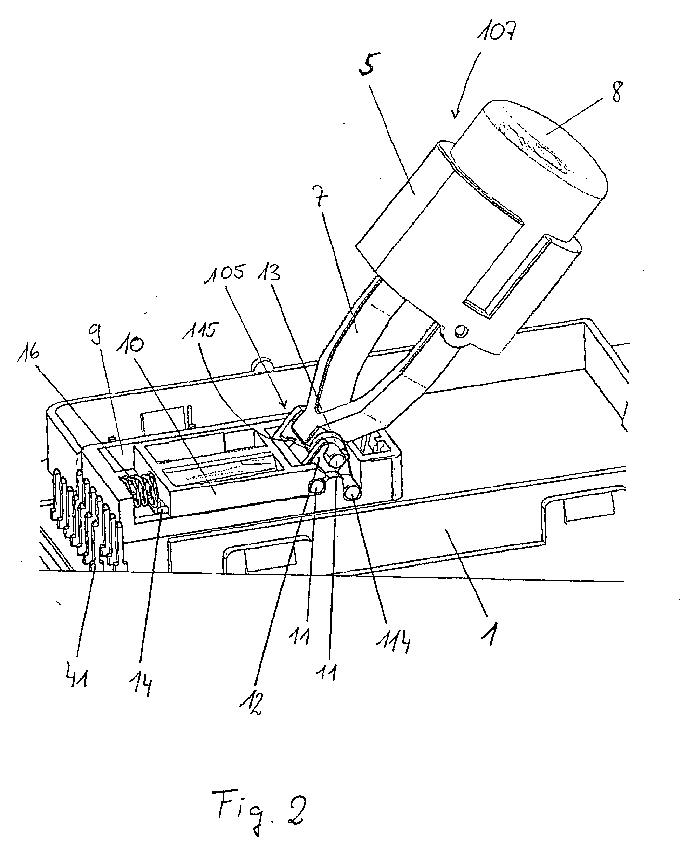

Im Deckel 4 mit der Start/Stop-Tasterführung, die sich im schräg am Gehäuse 109 angeordneten Gehäuseansatz 112 befindet, ist ein Lichtleitelement 6 zur Beleuchtung des Betätigungsorgans 107 befestigt. Eine Führung 9, die im Deckel 4 eingebaut ist, trägt einen Ansatz 10 mit Druckfeder 16 und Magnet 15. Der in etwa parallel zur Bewegungsrichtung des Trägerelementes 17 geführte Ansatz 10 ist gelenkig an einem Umlenkelement 105 angeordnet. Wie besonders gut anhand der perspektivischen Ansicht in Fig. 2 zu erkennen ist, ist das Umlenkelement 105 in der Art eines Kniehebels, bestehend aus zwei gelenkig miteinander verbundenen Armen 12 und 13 ausgestaltet. Der eine Arm 13 ist drehbar an Zapfen 114 im Gehäuse 109 befestigt und der andere Arm 12 ist mit dem Ansatz 10 gelenkig verbunden. Zur Verbindung der Arme 12, 13 untereinander sowie des Armes 12 mit dem Ansatz 10 dienen Stifte 11. Das Betätigungsorgan 107 weist einen Tastenknopf 8 mit einem zur Einwirkung auf das Gelenk 115 des Kniehebels dienenden Stößel 7 auf, wobei der Tastenknopf 8 sowie der Stößel 7 von einem Verschluß 5 gehalten werden. Der Tastenknopf 8 besteht aus glasklarem Kunststoff, der innen schwarz ausgefärbt sowie mit einem eingelaserten Schriftzug, beispielsweise Start/Stop, versehen ist, wobei der Schriftzug wiederum von heller, transluszenter Farbe abgedeckt wird.

Der Einbau des Zündschlosses 103 in die Instrumententafel 101, was in Fig. 3 gezeigt ist, erfolgt in eine geeignete Aufnahme von hinten. Der elektrische Anschluß des Zündschlosses 103 erfolgt über ein Bandkabel 117 mit angeschlagenem Buchsenstecker 116. Das Betätigungsorgan 107 und die Aufnahme 104 für den Schlüssel 102 werden durch Blenden 51 und 52 umrahmt, die auf das Gehäuse 109 aufgerastet werden, um so die entsprechenden Ausschnitte in der Instrumententafel 101 zu verdecken.

Nachfolgend soll weiter die Bedienung und Funktionsweise des Zündschloßsystems 100 anhand der Fig. 3 und 4 näher erläutert werden. Dabei ist in Fig. 4 die Ausgangsstellung, in der sich der Raststift 24 an der Stelle s1 der Rastkurve 108 befindet, die weitere Bewegungsstellung, in der sich der Raststift 24 an der Stelle s2 der Rastkurve 108 befindet, und die Bewegungsstellung, in der sich der Raststift 24 an der Stelle s3 der Rastkurve 108 befindet, eingezeichnet.

Der Schlüssel 102 wird mit seiner dünnen, schmalen Seite in die Aufnahme 104 gesteckt, wobei sich der Schieber 17 in der Ausgangsstellung s1 befindet. Dabei wird über den Schlüsseltaster 22 der Riegel 21, der insbesondere zwei Riegelelemente besitzt, freigegeben. Gleichzeitig werden die Schlüsselhaken 18 gegen die Blattfeder 26 aufgedrückt und verlassen dadurch die Sperrstellung für den Schieber 17. Insgesamt werden dadurch vier Sperrstellen gleichzeitig geöffnet, womit eine Fehlbedienung nahezu ausgeschlossen ist.

Nun kann ausgehend von der Ausgangsstellung s1 der Schieber 17 mit dem Schlüssel 102 gegen die Kraft, die sich aus der Anordnung von Rastkurve 108 und dem Raststift 24 ergibt, vom Benutzer manuell eingeschoben werden. Dabei greifen die Schlüsselhaken 18 in entsprechende Rasttaschen 118 im Schlüssel 102 und halten durch die Funktionskurven im Schlüsselgehäuse und im Boden 27 den Schlüssel 102 fest. Nach etwa 15 mm Weg verbleibt der Schlüssel 102 in einer bestimmten Position, nämlich der weiteren Bewegungsstellung s2, wenn man ihn losläßt. Hierzu besitzt die Rastkurve 108 zwischen der Ausgangsstellung s1 und der Bewegungsstellung s3 eine dem Schaltherz vorgelagerte, in etwa V-förmige Ausgestaltung. Der Schlüssel 102 kann in der weiteren Bewegungsstellung s2 durch Ziehen und Rückführen in die Ausgangsstellung s1 wieder aus der Aufnahme 104 entnommen werden, wie anhand von Fig. 4 zu sehen ist.

Aus der weiteren Bewegungsstellung s2 kann der Schlüssel 102 gegen die Rückstellkraft der Druckfeder 28 bis in eine Endstellung, und zwar die Bewegungstellung s3, manuell geschoben werden. Da der Schleppschieber 29 erst beginnend ab der weiteren Bewegungsstellung s2 auf die Druckfeder 28 einwirkt, wird die Rückstellkraft lediglich zwischen der weiteren Bewegungsstellung s2 und der Bewegungsstellung s3 wirksam. In der Bewegungsstellung s3 kann der Schlüssel 102 dann losgelassen werden, wobei der Schieber 17 mitsamt dem Schlüssel 102 mit Hilfe des Raststiftes 24 im Schaltherz der Rastkurve 108 einrastet, wie anhand von Fig. 4 zu sehen ist. Gleichzeitig betätigt der Schieber 17 mittels des Magneten 19 den Hallsensor 43'. Aus der Bewegungsstellung s3 kann der Schlüssel 102 durch Hineinschieben um etwa weitere 5 mm über die Druckfeder 28 wieder in die weitere Bewegungsstellung s2 ("15 mm eingesteckt") zurückgebracht werden. Von dort kann der Schlüssel 102 dann manuell aus der Aufnahme 104 abgezogen werden, wenn beispielsweise bei einem Automatikgetriebe vorher das Betätigungsorgan 107 nicht zum Starten betätigt wurde.

Das Zündschloß 103 weist eine Spule 44 und der Schlüssel 102 einen Transponder 119 auf. Die Spule 44 dient als Transponder- sowie Energieübertragungsspule, so daß zum einen vom Zündschloß 103 Energie auf den Schlüssel 102 zu dessen Betrieb übertragen werden kann und zum anderen eine elektromagnetischen Übertragung des elektronischen Codes zwischen dem Zündschloß 103 und dem Schlüssel 102 ermöglicht ist, wenn der Schlüssel 102 im Zündschloß 103 eingesteckt ist. Die Spule 44 ist einer Seite des Trägerelements 17 zugewandt sowie steht mit deren Spulenachse im wesentlichen senkrecht auf die Bewegungsrichtung des Trägerelements 17. Der Transponder 119 im Schlüssel 102 ist im wesentlichen quer zur Bewegungsrichtung des Trägerelements 17 bei in der Aufnahme 104 befindlichem Schlüssel 102 ausgerichtet. Dadurch kann in der Bewegungsstellung s3 die Transponder-/Energieübertragungsspule 44 im Zündschloß 103 mit der im Schlüssel 102 eingebauten Spule des Transponders 119 kommunizieren, derart daß in der Bewegungsstellung s3 eine Übertragung des Codes ermöglicht ist.

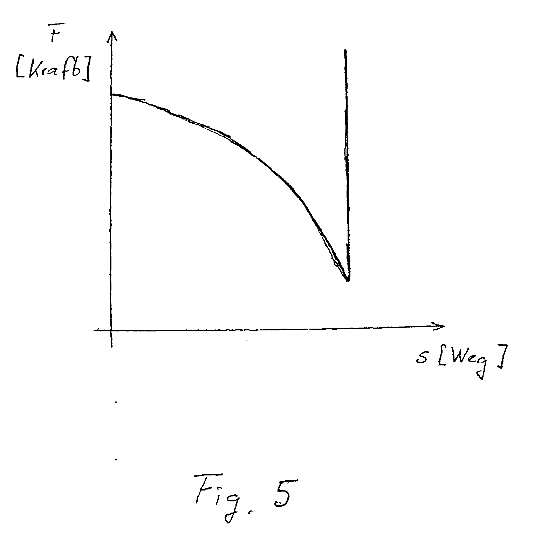

Der Start/Stop-Tastenknopf 8 des Betätigungsorgans 107 wird durch Eindrücken vom Benutzer betätigt. Dabei bewegt der Stößel 7 über das Umlenkelement 105, nämlich die Arme 12, 13 als Kniehebel den Ansatz 10 gegen die Druckfeder 16. Durch die Kniehebelfunktion wird ein abfallender Kraftverlauf erreicht, wie in Fig. 5 zu sehen, der eine sichere Funktion des Start/Stop-Tastenknopfes 8 ermöglicht. Der Ansatz 10 betätigt bei Betätigungsbewegung des Betätigungsorgans 107 über die eingebauten Magnete 15 die Hallsensoren 43. Anstelle von Hallsensoren 43, 43' können selbstverständlich auch sonstige sensorische oder auch elektrische, elektronische, optische o. dgl. Schaltelemente, die auf der Leiterplatte 40 angeordnet sind, verwendet werden. Das Umlenkelement 105 lenkt somit die in Richtung des Betätigungsorgans 107 erfolgende Betätigungsbewegung in Bewegungsrichtung des Trägerelementes 17 um. Für die durch das Betätigungsorgan 107 ausgelöste Start/Stop-Funktion können beispielsweise auch zwei getrennte und damit redundante Schaltelemente vorgesehen sein.

Mit dem Ansatz 10 kann über einen Stift 14 auch der Drehriegel 30 betätigt werden, wobei dann durch den Drehriegel 30 der Raststift 24 am Verlassen des Schaltherzes in der Rastkurve 108 gehindert wird, so daß durch das Eingreifen des Drehriegels 30 in die Rastkurve 108 eine Sperrung des Schiebers 17 und damit des Schlüssels 102 erfolgt. Der Drehriegel 30 wird dabei seinerseits elektromagnetisch vom Klappankermagnet 33 verrastet. Mittels des Magneten 31 am Drehriegel 30 wird ein Hallsensor betätigt und damit signalisiert, daß der Schlüssel 102 in der Bewegungsstellung s3 gesperrt ist. Der Schlüssel 102 wird erst durch ein Signal einer Steuereinheit entsperrt, wobei das Signal beispielsweise von der P("Parken")-Stellung am Wählhebel des Automatikgetriebes ausgelöst wird, indem der Klappankermagnet 33 und folglich der Drehriegel 30 wieder freigegeben werden. Der Schlüssel 102 kann dann, wie bereits beschrieben, durch Tieferdrücken um etwa 5 mm in die weitere Bewegungsstellung s2 ("15 mm eingesteckt") gebracht werden und von dort dann durch Ziehen gegen die Kraft, die durch die Rastkurve 108 und den Raststift 24 aufgebracht werden, herausgenommen werden. Der Schieber 17 wird in seiner Ausgangsstellung dann wieder an vier Stellen verriegelt.

Für den Nachtbetrieb ist der Start/Stop-Tastenknopf 8 am Betätigungsorgan 107 über das Lichtleitelement 6 von einer Leuchtdiode 42 beleuchtet, wie anhand von Fig. 3 zu erkennen ist. Hierzu führt das Lichtleitelement 6 bis zur Leuchtdiode 42, die auf der Leiterplatte 40 angeordnet ist. Desgleichen kann der Schlüsseltaster 22 über das Lichtleitelement 20 und die Leuchtdiode 42 beleuchtet werden

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann die Erfindung nicht nur an Zündschloßsystemen-für beliebige Fahrzeuge Verwendung finden, in denen der Schlüssel 102 in die Aufnahme 104 eingesteckt wird, sondern auch in Fahrzeugen mit einer "Keyless-Go"-Funktionalität, bei denen der Schlüssel lediglich vom Benutzer mitgeführt wird. Weiterhin kann die Erfindung auch an sonstigen Schlössern, beispielsweise solchen, die an Arbeitsmaschinen o. dgl. angeordnet sind, eingesetzt werden.

### Bezugszeichen-Liste:

- 1:: Grundrahmen
- 4:: Deckel
- 5:: Verschluß
- 6:: Lichtleitelement
- 7:: Stößel
- 8:: (Start/Stop-)Tastenknopf
- 9:: Führung
- 10:: Ansatz
- 11:: Stift
- 12,13:: Arm (von Kniehebel)
- 14:: Stift
- 15:: Magnet
- 16:: Druckfeder
- 17:: Trägerelement / Schieber
- 18:: Schlüsselhaken
- 19:: Magnet
- 20:: Lichtleitelement
- 21:: Riegel
- 22:: Schlüsseltaster
- 23:: Druckfeder
- 24:: Raststift
- 25:: Druckfeder
- 26:: Blattfeder
- 27:: Boden
- 28:: Druckfeder
- 29:: Schleppschieber
- 30:: Drehriegel
- 31:: Magnet
- 32:: Druckfeder
- 33:: Klappankermagnet
- 40:: Leiterplatte
- 41:: Actionpin
- 42:: Leuchtdiode
- 43,43':: Hallsensor
- 44:: Spule, Transponder-/Energieübertragungsspule
- 51,52:: Blende
- 100:: Zündschloßsystem
- 101:: Instrumententafel
- 102:: Schlüssel
- 103:: Zündschloß
- 104:: Aufnahme
- 105:: Umlenkelement
- 106:: Anschlag (für Trägerelement)
- 107:: Betätigungsorgan
- 108:: Rastkurve
- 109:: Gehäuse
- 110:: Führung (für Trägerelement)
- 111:: Öffnung
- 112:: Gehäuseansatz
- 113:: Drehlager (von Gehäuseansatz)
- 114:: Zapfen (für Arm von Kniehebel)
- 115:: Gelenk (von Kniehebel)
- 116:: Buchsenstecker
- 117:: Bandkabel
- 118:: Rasttasche (am Schlüssel)
- 119:: Transponder

## Patentansprüche

1. Zündschloßsystem, insbesondere in einem Kraftfahrzeug, mit einem elektronischen Schlüssel (102) sowie mit einem elektronischen Zündschloß (103), wobei das Zündschloß (103) eine in einem Trägerelement (17) befindliche Aufnahme (104) für den Schlüssel (102) aufweist, wobei das Trägerelement (17) mittels des Schlüssels (102) zwischen einer Ausgangs- und einer Bewegungsstellung (s1, s3) manuell bewegbar ist, wobei die Bewegungsstellung (s3) für das Trägerelement (17) als Raststellung ausgebildet ist, wobei die Raststellung durch das Zusammenwirken einer in der Art eines Schaltherzens ausgestalteten Rastkurve (108) mit einem in die Rastkurve (108) eingreifenden, mit einer elastischen Kraft beaufschlagten Raststift (24) festgelegt ist, und wobei nach positiver Auswertung eines zwischen dem Schlüssel (102) und dem Zündschloß (103) ausgetauschten elektronischen Codes wenigstens eine vom Zündschloß (103) bewirkbare Funktion, wie das Starten des Kraftfahrzeugs, freigegeben ist, **dadurch gekennzeichnet, daß** das Trägerelement (17) in der Art eines Schiebers linear beweglich ist, und daß die Rastkurve (108) eine dem Schaltherz vorgelagerte, in etwa V-förmige Ausgestaltung besitzt, derart daß das Trägerelement (17) in eine zwischen der Ausgangs- und der Bewegungsstellung (s1, s3) liegende, weitere Bewegungsstellung (s2) bewegbar ist, und dart verbleiben kann.

2. Zündschloßsystem nach Anspruch 1, **dadurch gekennzeichnet, daß** das Zündschloß (103) ein Gehäuse (109) mit einer Öffnung (111) aufweist, und daß die Öffnung (111) durch das Trägerelement (17) in dessen Ausgangsstellung derart verschlossen ist, daß die Aufnahme (104) im Trägerelement (17) mit der Öffnung (111) korrespondiert, daß vorzugsweise eine vom Schlüssel (102) bewegliche Klappe, die insbesondere federbelastet ausgestaltet ist, die Aufnahme (104) verschließt, und daß weiter vorzugsweise im Gehäuse (109) eine Führung (110) für die Bewegung des Trägerelements (17) befindlich ist.

3. Zündschloßsystem nach Anspruch 1 oder 2, **dadurch gekennzeichnet, daß** in der Aufnahme (104) ein Schlüsseltaster (22) angeordnet ist, wobei der Schlüsseltaster (22) bei in der Aufnahme (104) befindlichem Schlüssel (102) einen Riegel (21), insbesondere mit zwei Riegelelementen, für die Bewegung des Trägerelements (17) freigibt.

4. Zündschloßsystem nach Anspruch 1, 2 oder 3, **dadurch gekennzeichnet, daß** die Aufnahme (104), insbesondere am Schlüsseltaster (22), mittels eines Lichtleitelementes (20) beleuchtbar ausgestaltet ist.

5. Zündschloßsystem nach einem der Ansprüche 1 bis 4, **dadurch gekennzeichnet, daß** federbelastete Schlüsselhaken (18), insbesondere zwei einander gegenüberliegende Schlüsselhaken (18), zum Eingreifen in den Schlüssel (102) bei in der Aufnahme (104) befindlichem Schlüssel (102) am Trägerelement (17) angeordnet sind, wobei die Schlüsselhaken (18) die Bewegung des Trägerelements (17) bei nicht in der Aufnahme (104) befindlichen Schlüssel (102) sperren und bei in der Aufnahme (104) befindlichen Schlüssel (102) freigeben.

6. Zündschloßsystem nach einem der Ansprüche 1 bis 5, **dadurch gekennzeichnet, daß** eine Rückstellkraft mittels einer Druckfeder (28) in Richtung auf die Ausgangsstellung (s1) auf das Trägerelement (17) bei dessen Bewegung einwirkt, wobei insbesondere die Rückstellkraft zwischen der weiteren Bewegungsstellung (s2) und der Bewegungsstellung (s3) wirksam ist, indem ein am Trägerelement (17) angeordneter Schleppschieber (29) beginnend ab der weiteren Bewegungsstellung (s2) auf die Druckfeder (28) einwirkt.

7. Zündschloßsystem nach einem der Ansprüche 1 bis 6, **dadurch gekennzeichnet, daß** das Trägerelement (17) in der Bewegungsstellung (s3) sowie gegebenenfalls in der weiteren Bewegungsstellung (s2) ein elektrisches, elektronisches, optisches, sensorisches Schaltelement betätigt, daß vorzugsweise das Schaltelement als Hallsensor (43') ausgebildet ist sowie am Trägerelement (17) ein zum Hallsensor (43') korrespondierender Magnet (19) angeordnet ist.

8. Zündschloßsystem nach einem der Ansprüche 1 bis 7, **dadurch gekennzeichnet, daß** das Trägerelement (17) in der Bewegungsstellung (s3) mittels eines Drehriegels (30) verriegelbar ist, insbesondere indem das Trägerelement (17) bei Bewegung in die Bewegungsstellung (s3) über einen Stift (14) den Drehriegel (30) in dessen verriegelnde Stellung bewegt, wobei vorzugsweise der Drehriegel (30) zur Verriegelung in die Rastkurve (108) eingreift, und wobei weiter vorzugsweise der Drehriegel (30) elektromagnetisch, insbesondere mittels eines Klappankermagneten (33), ver- sowie entrastbar ist.

9. Zündschloßsystem nach einem der Ansprüche 1 bis 8, **dadurch gekennzeichnet, daß** das Zündschloß (102) eine Spule (44) sowie der Schlüssel (102) einen Transponder (119) zur elektromagnetischen Übertragung des elektronischen Codes aufweisen, daß die Spule (44) einer Seite des Trägerelements (17) zugewandt ist sowie mit deren Spulenachse im wesentlichen senkrecht auf die Bewegungsrichtung des Trägerelements (17) steht, und daß der Transponder (119) im wesentlichen quer zur Bewegungsrichtung des Trägerelements (17) bei in der Aufnahme (104) befindlichem Schlüssel (102) ausgerichtet ist, derart daß in der Bewegungsstellung (s3) eine Übertragung des Codes ermöglicht ist.

10. Zündschloßsystem nach einem der Ansprüche 1 bis 9, **dadurch gekennzeichnet, daß** im Gehäuse (109) eine Leiterplatte (40) zur Aufnahme der elektrischen und/oder elektronischen Bauteile, wie der Schaltelemente, Hallsensoren (43, 43'), Leuchtdioden (42), insbesondere in etwa parallel zur Führung (110) für das Trägerelement (17), angeordnet ist, und daß die Leiterplatte (40) im Gehäuse (109) eingerastet ist.

11. Zündschloßsystem nach einem der Ansprüche 1 bis 10, **dadurch gekennzeichnet, daß** die vom Zündschloß (103) bewirkbare Funktion mittels eines Betätigungsorgans (107), das insbesondere schräg zur Aufnahme (104) angeordnet ist, manuell auslösbar ist, daß das Betätigungsorgan (107) bei seiner Betätigungsbewegung auf ein im Zündschloß (103) befindliches, dem Trägerelement (17) zugewandtes elektrisches, elektronisches, optisches, sensorisches Schaltelement einwirkt, und daß vorzugsweise ein Umlenkelement (105) die in Richtung des Betätigungsorgans (107) erfolgende Betätigungsbewegung in Bewegungsrichtung des Trägerelements (17) umlenkt.

12. Zündschloßsystem nach einem der Ansprüche 1 bis 11, **dadurch gekennzeichnet, daß** das Umlenkelement (105) als Kniehebel ausgebildet ist, wobei das Betätigungsorgan (107), insbesondere mittels eines Stößels (7), auf das Gelenk (115) zweier gelenkig miteinander verbundenen Arme (12, 13) einwirkt, wobei vorzugsweise der eine Arm (13) im Gehäuse (109) drehbar befestigt ist, und wobei weiter vorzugsweise der andere Arm (12) einen wiederum gelenkig verbundenen Ansatz (10) besitzt.

13. Zündschloßsystem nach einem der Ansprüche 1 bis 12, **dadurch gekennzeichnet, daß** der Ansatz (10) in etwa parallel zur Bewegungsrichtung des Trägerelementes (17) geführt ist, und daß vorzugsweise der Ansatz (10) bei Betätigungsbewegung des Betätigungsorgans (107) auf das Schaltelement einwirkt.

14. Zündschloßsystem nach einem der Ansprüche 1 bis 13, **dadurch gekennzeichnet, daß** das Schaltelement auf der Leiterplatte (40) angeordnet ist, wobei vorzugsweise das Schaltelement aus einem Hallsensor (43) besteht, der mit einem am Ansatz (10) befindlichen Magneten (15) zusammenwirkt.

15. Zündschloßsystem nach einem der Ansprüche 1 bis 14, **dadurch gekennzeichnet, daß** das Betätigungsorgan (107) als Drucktaste (8) ausgebildet ist.

16. Zündschloßsystem nach einem der Ansprüche 1 bis 15, **dadurch gekennzeichnet, daß** das Betätigungsorgan (107) in einem schräg am Gehäuse (109) angeordneten Gehäuseansatz (112) geführt ist, und daß vorzugsweise der Gehäuseansatz (112) zum Ausgleich von Toleranzen bei der Montage des Zündschlosses (103) im Kraftfahrzeug verstellbar am Gehäuse (109) angeordnet ist.

17. Zündschloßsystem nach einem der Ansprüche 1 bis 16, **dadurch gekennzeichnet, daß** das Betätigungsorgan (107) mittels eines Lichtleitelements (6), das insbesondere zu einer auf der Leiterplatte (40) angeordneten Leuchtdiode (42) führt, beleuchtbar ist.

18. Zündschloßsystem nach einem der Ansprüche 1 bis 17, **dadurch gekennzeichnet, daß** das Betätigungsorgan (107) und/oder die Aufnahme (104) durch eine Blende (51, 52) umrahmt ist, wobei insbesondere die Blende (51, 52) auf das Gehäuse (109) aufgerastet ist.

## Claims

1. Ignition switch system, in particular in a motor vehicle, with an electronic key (102) and with an electronic ignition switch (103), whereby the ignition switch (103) comprises a slot (104) for the key (102) located in a carrier element (17), whereby the carrier element (17) can be moved manually by means of the key (102) between a initial position and a movement position (s1, s3), whereby the movement position (s3) for the carrier element (17) is designed as a detent position, whereby the detent position is determined by the interaction of a detent curve (108) designed as a kind of switch heart with a detent pin (24) engaging in the detent curve (108) and loaded with an elastic force, and whereby after a positive evaluation of an electronic code exchanged between the key (102) and the ignition switch (103) at least one function activatable by the ignition switch (103), such as the starting of the motor vehicle, is activated, **characterised in that** the carrier element (17) can be moved linearly like a kind of slide, and **in that** the detent curve (108) has a roughly V-shaped design mounted in front of the switch heart, such that the carrier element (17) can be moved into a further movement position (s2) lying between the initial position and the movement position (s1, s3) and can remain there.

2. Ignition switch system according to claim 1, **characterised in that** the ignition switch (103) has a housing (109) with an opening (111), and **in that** the opening (111) is locked by the carrier element (17) in its initial position such that the slot (104) in the carrier element (17) corresponds with the opening (111), **in that**, preferably, a flap moved by the key (102), which is designed in particular to be spring-loaded, closes the slot (104), and **in that** in addition preferably in the housing (109) a guide (110) is located for the movement of the carrier element (17).

3. Ignition switch system according to claim 1 or 2, **characterised in that** in the slot (104) a key switch (22) is arranged, whereby the key switch (22), when the key (102) is located in the slot (104), releases a lock (21), in particular with two lock elements, for the movement of the carrier element (17).

4. Ignition switch system according to claim 1, 2 or 3, **characterised in that** the slot (104), in particular on the key switch (22), is designed to be illuminated by means of a fibre-optic element (20).

5. Ignition switch system according to one of claims 1 to 4, **characterised in that** spring-loaded key hooks (18), in particular two opposite key hooks (18), are arranged for engaging in the key (102) when the key (102) is located in the slot (104) on the carrier element (17), whereby the key hooks (18) prevent the movement of the carrier element (17) when the key (102) is not located in the slot (104) and release it when the key (102) is in the slot (104).

6. Ignition switch system according to one of claims 1 to 5, **characterised in that** a restoring force of a compression spring (28) acts in the direction of the initial position (s1) on the carrier element (17) upon its movement, whereby in particular the restoring force is effective between the additional movement position (s2) and the movement position (s3), **in that** a drag slide (29) arranged on the carrier element (17) acts starting at the additional movement position (s2) on the compression spring (28).

7. Ignition switch system according to one of claims 1 to 6, **characterised in that** the carrier element (17) in the movement position (s3) and if necessary in the additional movement position (s2) activates an electrical, electronic, optical, sensory switch element, **in that** preferably the switch element is designed to be a Hall-sensor (43') and a magnet (19) corresponding to the Hall sensor (43') is arranged on the carrier element (17).

8. Ignition switch system according to one of claims 1 to 7, **characterised in that** the carrier element (17) can be locked in the movement position (s3) by means of a rotary lock (30), in particular **in that** the carrier element (17) upon movement into the movement position (s3) via a pin (14) moves the rotary lock (30) into its locking position, whereby preferably the rotary lock (30) for locking engages in the detent curve (108), and whereby also preferably the rotary lock (30) can be locked and unlocked electromagnetically, in particular by means of a clapper armature magnet (33).

9. Ignition switch system according to one of claims 1 to 8, **characterised in that** the ignition switch (102) comprises a coil (44) and the key (102) a transponder (119) for the electromagnetic transmission of the electronic code, **in that** the coil (44) faces one side of the carrier element (17) and with its coil axis is essentially perpendicular to the movement direction of the carrier element (17), and **in that** the transponder (119) is aligned essentially perpendicular to the direction of movement of the carrier element (17) when the key (102) is located in the slot (104), such that in movement position (s3) a transmission of the code is made possible.

10. Ignition switch system according to one of claims 1 to 9, **characterised in that** in the housing (109) a printed board (40) is arranged for mounting the electrical and/or electronic components, such as the switch elements, Hall sensors (43, 43'), light-emitting diodes (42), in particular roughly parallel to the guide (110) for the carrier element (17), and **in that** the printed board (40) is locked into place in the housing (109).

11. Ignition switch system according to one of claims 1 to 10, **characterised in that** the function activated by the ignition switch (103) can be manually triggered by means of an activating organ (107) that is arranged in particular obliquely relative to the slot (104), **in that** the activating organ (107) with its activating movement acts on an electrical, electronic, optical, sensory switch element located in the ignition switch (103) and facing the carrier element (17), and **in that** preferably a reversing element (105) reverses the activating movement in the direction of the activating organ (107) into the movement direction of the carrier element (17).

12. Ignition switch system according to one of claims 1 to 11, **characterised in that** the reversing element (105) is designed as a toggle lever, whereby the activating organ (107) acts in particular by means of ram (7) on the hinge (115) of two articulated arms (12, 13), whereby preferably one arm (13) is rotatably secured in the housing (109), and whereby preferably the other arm (12) also has an articulated extension (10).

13. Ignition switch system according to one of claims 1 to 12, **characterised in that** the extension (10) is guided approximately parallel to the movement direction of the carrier element (17), and **in that** preferably the extension (10) with an activation movement of the activating organ (107) acts on the switch element.

14. Ignition switch system according to one of claims 1 to 13, **characterised in that** the switch element is arranged on the printed board (40), whereby preferably the switch element consists of a Hall sensor (43) which interacts with a magnet (15) located on the extension (10).

15. Ignition switch system according to one of claims 1 to 14, **characterised in that** the activating organ (107) is in the form of a pushbutton (8).

16. Ignition switch system according to one of claims 1 to 15, **characterised in that** the activating organ (107) is guided in a housing extension (112) arranged obliquely on the housing (109), and **in that** preferably the housing extension (112) is arranged adjustably on the housing (109) for the equalisation of tolerances on the assembly of the ignition switch (103) in the motor vehicle.

17. Ignition switch system according to one of claims 1 to 16, **characterised in that** the activating organ (107) can be illuminated by means of a fibre-optic element (6), which in particular leads to a light-emitting diode (42) arranged on the printed board (40).

18. Ignition switch system according to one of claims 1 to 17, **characterised in that** the activating organ (107) and/or the slot (104) is framed by a cover (51,52), whereby in particular the cover (51, 52) is locked onto the housing (109).

## Revendications

1. Système de serrure de contact, en particulier dans un véhicule automobile, comprenant une clé électronique (102) ainsi qu'une serrure de contact électronique (103), dans lequel
la serrure de contact (103) présente un logement (104) pour la clé (102) situé dans un élément de support (17),
l'élément de support (17) peut être déplacé manuellement au moyen de la clé (102) entre une position initiale et une position de mouvement (s1, s3),
la position de mouvement (s3) pour l'élément de support (17) est une position d'arrêt,
la position d'arrêt est définie par la coopération entre une encoche d'arrêt (108) en forme de coeur de commutation et une tige d'arrêt (24) sollicitée par une force élastique et s'engageant dans l'encoche d'arrêt (108), et
après l'évaluation positive d'un code électronique échangé entre la clé (102) et la serrure de contact (103), au moins une fonction telle que le démarrage du véhicule automobile pouvant être déclenchée par la serrure de contact (103) est autorisée,
**caractérisé en ce que**
l'élément de support (17) est mobile de manière linéaire comme un coulisseau, et l'encoche d'arrêt (108) a sensiblement la forme d'un V placé en amont du coeur de commutation, de sorte que l'élément de support (17) puisse être déplacé et rester dans une autre position de mouvement (s2) située entre les positions initiale et de mouvement (s1, s3).

2. Système de serrure de contact selon la revendication 1,
**caractérisé en ce que**
la serrure de contact (103) présente un boîtier (109) avec une ouverture (111), et l'ouverture (111) est fermée par l'élément de support (17), dans la position initiale de celui-ci, de sorte que le logement (104) dans l'élément de support (17) corresponde à l'ouverture (111), un clapet avantageusement déplaçable à l'aide de la clé (102) et en particulier sollicité par ressort ferme le logement (104), et en outre avantageusement un guidage (110) se trouve dans le boîtier (109) pour le mouvement de l'élément de support (17).

3. Système de serrure de contact selon la revendication 1 ou 2,
**caractérisé en ce que**
le logement (104) contient, un palpeur de clé (22) qui lorsque la clé (102) se trouve dans le logement (104), libère un verrou (21) muni en particulier de deux éléments de verrou pour le mouvement de l'élément de support (17).

4. Système de serrure de contact selon la revendication 1, 2 ou 3,
**caractérisé en ce que**
le logement (104), en particulier sur le palpeur de clé (22), peut être éclairé au moyen d'un guide de lumière (20).

5. Système de serrure de contact selon l'une quelconque des revendications 1 à 4,
**caractérisé en ce que**
des crochets de clé (18) sollicités par ressort, en particulier deux crochets de clé (18) situés l'un en face de l'autre, sont disposés sur l'élément de support (17) pour s'engager dans la clé (102) introduite dans le logement (104), et les crochets de clé (18) bloquent le mouvement de l'élément de support (17) si la clé (102) ne se trouve pas dans le logement (104) et le libèrent si la clé (102) est introduite dans le logement (104).

6. Système de serrure de contact selon l'une quelconque des revendications 1 à 5,
**caractérisé en ce qu'**
une force de rappel agit au moyen d'un ressort de pression (28) sur l'élément de support (17) dans la direction de la position initiale (s1) lors du mouvement de celui-ci, et notamment la force de rappel agit notamment entre l'autre position de mouvement (s2) et la position de mouvement (s3), en sollicitant un coulisseau suiveur (29) agit à partir de l'autre position de mouvement (s2) sur le ressort de pression (28).

7. Système de serrure de contact selon l'une quelconque des revendications 1 à 6,
**caractérisé en ce que**
dans la position de mouvement (s3) ainsi que le cas échéant dans l'autre position de mouvement (s2), l'élément de support (17) actionne un élément de commutation électrique, électronique, optique ou sensoriel, l'élément de commutation est de préférence un capteur Hall (43'), et l'élément de support (17) comporte un aimant (19) correspondant avec le capteur Hall (43').

8. Système de serrure de contact selon l'une quelconque des revendications 1 à 7,
**caractérisé en ce que**
dans la position de mouvement (s3) l'élément de support (17) peut être verrouillé au moyen d'un verrou rotatif (30), en particulier **en ce que** lors du mouvement dans la position de mouvement (s3) l'élément de support (17) déplace le verrou rotatif (30) par une tige (14) dans sa position de verrouillage, le verrou rotatif (30) s'engagant à cet effet de préférence dans l'encoche d'arrêt (108), et le verrou rotatif (30) peut de préférence en outre être bloqué ou libéré de manière électromagnétique en particulier au moyen d'un aimant à induit mobile (33).

9. Système de serrure de contact selon l'une quelconque des revendications 1 à 8,
**caractérisé en ce que**
la serrure de contact (102) présente une bobine (44) et la clé (102) un transpondeur (119) pour la transmission électromagnétique du code électronique, la bobine (44) est tournée vers une face de l'élément de support (17) et son axe de bobine est pour l'essentiel perpendiculaire à la direction de mouvement de l'élément de support (17), et le transpondeur (119) est orienté pour l'essentiel transversalement à la direction de mouvement de l'élément de support (17) lorsque la clé (102) est introduite dans le logement (104) pour ainsi permettre une transmission du code dans la position de mouvement (s3).

10. Système de serrure de contact selon l'une quelconque des revendications 1 à 9,
**caractérisé en ce qu'**
une plaquette imprimée (40) est disposée dans le boîtier (109) pour recevoir les composants électriques et/ou électroniques tels que les éléments de commutation, des capteurs Hall (43, 43'), des diodes luminescentes (42), en particulier à peu près parallèlement au guidage (110) pour l'élément de support (17), et la plaquette imprimée (40) est encliquetée dans le boîtier (109).

11. Système de serrure de contact selon l'une quelconque des revendications 1 à 10,
**caractérisé en ce que**
la fonction réalisable par la serrure de contact (103) peut être déclenchée manuellement au moyen d'un organe d'actionnement (107) disposé en particulier en biais par rapport au logement (104), l'organe d'actionnement (107), lors de son mouvement d'actionnement, agit sur un élément de commutation électrique, électronique, optique ou sensoriel tourné vers l'élément de support (17) dans la serrure de contact (103), et de préférence un élément de déviation (105) dévie le mouvement d'actionnement s'effectuant dans la direction de l'organe d'actionnement (107) dans la direction de mouvement de l'élément de support (17).

12. Système de serrure de contact selon l'une quelconque des revendications 1 à 11,
**caractérisé en ce que**
l'élément de déviation (105) a la forme d'une genouillère, en outre l'organe d'actionnement (107) agit, en particulier au moyen d'un poussoir (7), sur l'articulation (115) de deux bras (12, 13) reliés l'un à l'autre de manière articulée, en outre l'un des bras (13) est de préférence fixé en rotation dans le boîtier (109), et en outre l'autre bras (12) présente plus préférablement un appendice (10), également relié de manière articulée.

13. Système de serrure de contact selon l'une quelconque des revendications 1 à 12,
**caractérisé en ce que**
l'appendice (10) est guidé à peu près parallèlement à la direction de mouvement de l'élément de support (17), et l'appendice (10) agit de préférence sur l'élément de commutation lors du mouvement d'actionnement de l'organe d'actionnement (107).

14. Système de serrure de contact selon l'une quelconque des revendications 1 à 13,
**caractérisé en ce que**
l'élément de commutation est disposé sur la plaquette imprimée (40), en outre l'élément de commutation est de préférence un capteur Hall (43) qui coopère avec un aimant (15) situé sur l'appendice (10).

15. Système de serrure de contact selon l'une quelconque des revendications 1 à 14,
**caractérisé en ce que**
l'organe d'actionnement (107) a la forme d'une touche (8).

16. Système de serrure de contact selon l'une quelconque des revendications 1 à 15,
**caractérisé en ce que**
l'organe d'actionnement (107) est guidé dans un appendice de boîtier (112) disposé en biais sur le boîtier (109), et l'appendice de boîtier (112) est de préférence disposé de manière réglable sur le boîtier (109) pour compenser des tolérances lors du montage de la serrure de contact (103) dans le véhicule automobile.

17. Système de serrure de contact selon l'une quelconque des revendications 1 à 16,
**caractérisé en ce que**
l'organe d'actionnement (107) peut être éclairé au moyen d'un élément guide de lumière (6) qui conduit notamment vers une diode luminescente (42) disposée sur la plaquette imprimée (40).

18. Système de serrure de contact selon l'une quelconque des revendications 1 à 17,
**caractérisé en ce que**
l'organe d'actionnement (107) et/ou le logement (104) est (sont) encadré(s) par un habillage (51, 52) qui en particulier s'emboîte sur le boîtier (109).
